# EUROPEAN PATENT SPECIFICATION

(11) **EP 4 483 042 B1**
(45) Date of publication and mention of the grant of the patent: **02.12.2026**
(21) Application number: 23754565.2
(22) Date of filing: 21.07.2023
(51) Int. Cl.: F02C 6/08

(54) **GAS TURBINE ENGINE WITH TURBINE VANE CARRIER COOLING FLOW PATH**
GASTURBINENMOTOR MIT TURBINENSCHAUFELTRÄGERKÜHLSTRÖMUNGSWEG
MOTEUR À TURBINE À GAZ AVEC TRAJET D'ÉCOULEMENT DE REFROIDISSEMENT DE SUPPORT D'AUBAGE DE TURBINE

(30) Priority: 09.08.2022 US 202263370793 P
(43) Date of publication of application: 01.01.2025
(73) Proprietor: Siemens Energy Global GmbH & Co. KG, 81739 München (DE)
(72) Inventor: FARABOW, III, John William, Canonsburg, 15317 PA (US); KRÜTZFELDT, Joachim, 45481 Mülheim an der Ruhr (DE)
(86) International application number: PCT/US2023/028335
(87) International publication number: WO 2024/035537

(56) References cited:
- US-A1- 2016 251 981
- US-B2- 10 612 466
- US-B2- 8 257 017
- US-B2- 8 602 724

## Description

### BACKGROUND

The invention relates to a gas turbine. A gas turbine engine typically includes a compressor section, a turbine section, and a combustion section disposed therebetween. The compressor section includes multiple stages of rotating compressor blades and stationary compressor vanes. The combustion section typically includes a plurality of combustors. The turbine section includes multiple stages of rotating turbine blades and stationary turbine vanes. Turbine blades and vanes often operate in a high temperature environment and are internally cooled.

US 10 612 466 B2 and US 2016/251981 A1 disclose prior art gas turbines.

### BRIEF SUMMARY

The invention is related to a gas turbine according to claim 1.

### BRIEF DESCRIPTION OF THE DRAWINGS

To easily identify the discussion of any particular element or act, the most significant digit or digits in a reference number refer to the figure number in which that element is first introduced.
FIG. 1 is a longitudinal cross-sectional view of a gas turbine engine taken along a plane that contains a longitudinal axis or central axis.
FIG. 2 is a cross-section view of a portion of the gas turbine engine shown in FIG. 1 that better illustrates the turbine section having a turbine vane carrier cooling flow path.
FIG. 3 is a cross-section view of a portion of the gas turbine engine shown in FIG. 1 that better illustrates the turbine section having another turbine vane carrier cooling flow path.

### DETAILED DESCRIPTION

It is to be understood that the phraseology and terminology used herein is for the purpose of description and should not be regarded as limiting, as long as it is within the scope of the appended claims.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including", "having", and "comprising", as well as derivatives thereof, mean inclusion without limitation. The singular forms "a", "an", and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith" as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

Also, in the description, the terms "axial" or "axially" refer to a direction along a longitudinal axis of a gas turbine engine. The terms "radial" or "radially" refer to a direction perpendicular to the longitudinal axis of the gas turbine engine. The terms "downstream" or "aft" refer to a direction along a flow direction. The terms "upstream" or "forward" refer to a direction against the flow direction.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

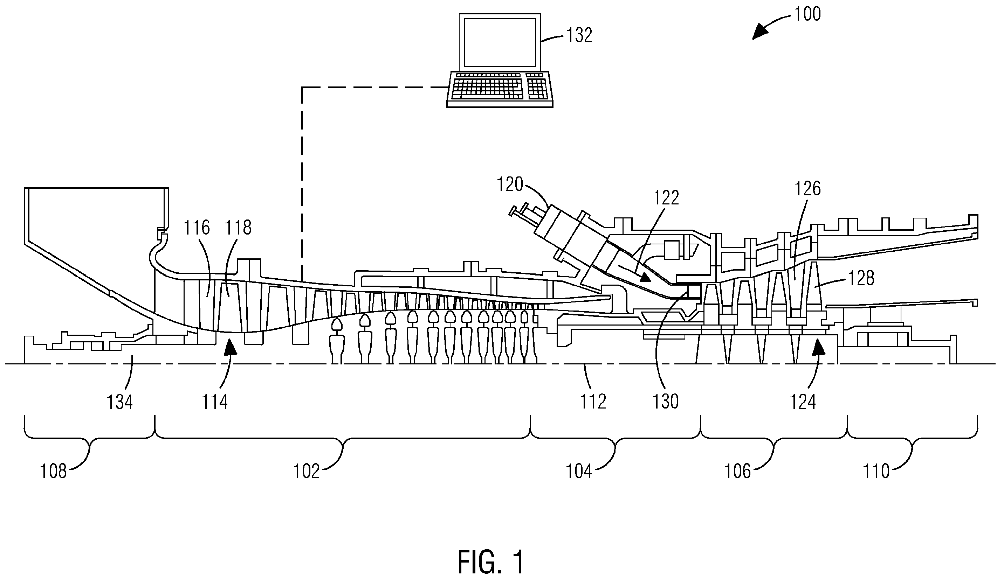

FIG. 1 illustrates an example of a gas turbine engine 100 including a compressor section 102, a combustion section 104, and a turbine section 106 arranged along a central axis 112. The compressor section 102 includes a plurality of compressor stages 114 with each compressor stage 114 including a set of stationary compressor vanes 116 or adjustable guide vanes and a set of rotating compressor blades 118. A rotor 134 supports the rotating compressor blades 118 for rotation about the central axis 112 during operation. In some constructions, a single one-piece rotor 134 extends the length of the gas turbine engine 100 and is supported for rotation by a bearing at either end. In other constructions, the rotor 134 is assembled from several separate spools that are attached to one another or may include multiple disk sections that are attached via a bolt or plurality of bolts.

The compressor section 102 is in fluid communication with an inlet section 108 to allow the gas turbine engine 100 to draw atmospheric air into the compressor section 102. During operation of the gas turbine engine 100, the compressor section 102 draws in atmospheric air and compresses that air for delivery to the combustion section 104. The illustrated compressor section 102 is an example of one compressor section 102 with other arrangements and designs being possible.

In the illustrated construction, the combustion section 104 includes a plurality of separate combustors 120 that each operate to mix a flow of fuel with the compressed air from the compressor section 102 and to combust that air-fuel mixture to produce a flow of high temperature, high pressure combustion gases or exhaust gas 122. Of course, many other arrangements of the combustion section 104 are possible.

The turbine section 106 includes a plurality of turbine stages 124 with each turbine stage 124 including a number of stationary turbine vanes 126 and a number of rotating turbine blades 128. The turbine stages 124 are arranged to receive the exhaust gas 122 from the combustion section 104 at a turbine inlet 130 and expand that gas to convert thermal and pressure energy into rotating or mechanical work. The turbine section 106 is connected to the compressor section 102 to drive the compressor section 102. For gas turbine engines 100 used for power generation or as prime movers, the turbine section 106 is also connected to a generator, pump, or other device to be driven. As with the compressor section 102, other designs and arrangements of the turbine section 106 are possible.

An exhaust portion 110 is positioned downstream of the turbine section 106 and is arranged to receive the expanded flow of exhaust gas 122 from the final turbine stage 124 in the turbine section 106. The exhaust portion 110 is arranged to efficiently direct the exhaust gas 122 away from the turbine section 106 to assure efficient operation of the turbine section 106. Many variations and design differences are possible in the exhaust portion 110. As such, the illustrated exhaust portion 110 is but one example of those variations.

A control system 132 is coupled to the gas turbine engine 100 and operates to monitor various operating parameters and to control various operations of the gas turbine engine 100. In preferred constructions the control system 132 is typically micro-processor based and includes memory devices and data storage devices for collecting, analyzing, and storing data. In addition, the control system 132 provides output data to various devices including monitors, printers, indicators, and the like that allow users to interface with the control system 132 to provide inputs or adjustments. In the example of a power generation system, a user may input a power output set point and the control system 132 may adjust the various control inputs to achieve that power output in an efficient manner.

The control system 132 can control various operating parameters including, but not limited to variable inlet guide vane positions, fuel flow rates and pressures, engine speed, flow control valve positions, generator load, and generator excitation. Of course, other applications may have fewer or more controllable devices. The control system 132 also monitors various parameters to assure that the gas turbine engine 100 is operating properly. Some parameters that are monitored may include inlet air temperature, compressor outlet temperature and pressure, combustor outlet temperature, fuel flow rate, generator power output, bearing temperature, and the like. Many of these measurements are displayed for the user and are logged for later review should such a review be necessary.

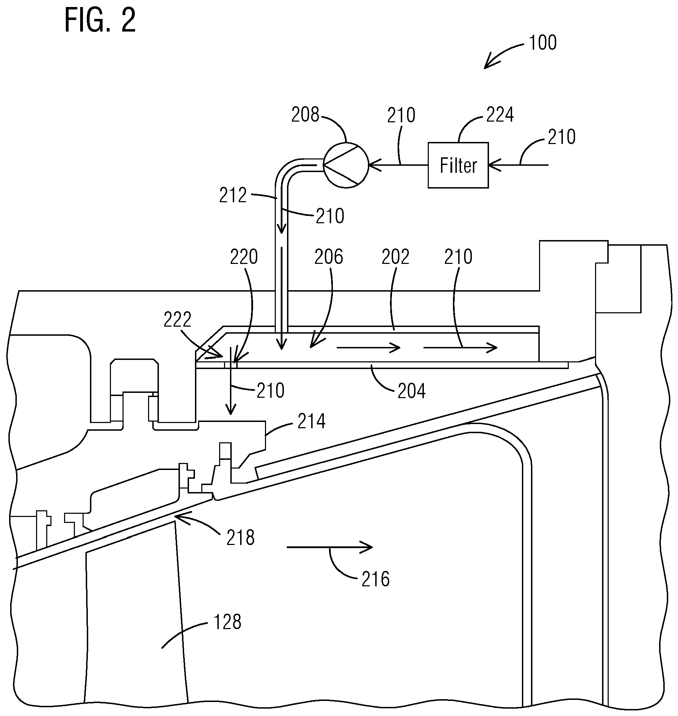

FIG. 2 illustrates a cross-section view of a portion of the gas turbine engine 100 shown in FIG. 1 that better illustrates the turbine section 106. The gas turbine engine 100 includes an outer casing 202 and an inner casing 204 that is surrounded by the outer casing 202. The outer casing 202 and the inner casing 204 define a casing cavity 206 therebetween. The casing cavity 206 has an annular shape and extends to the exhaust portion 110. Components of the gas turbine engine 100 are disposed within the inner casing 204, such as the stationary turbine vanes 126, and the rotating turbine blades 128, etc. A portion of one rotating turbine blade 128 of the last stage of the turbine section 106 is shown in FIG. 2.

A turbine vane carrier 214 is disposed within the inner casing 204. The turbine vane carrier 214 carries a plurality of stationary turbine vanes 126 (not shown in FIG. 2). The turbine vane carrier 214 extends over a plurality of rotating turbine blades 128. An aft end of the turbine vane carrier 214 with respect to a working flow 216 extends over the plurality of rotating turbine blades 128 of the last stage of the turbine section 106. The working flow 216 may include the exhaust gas 122 shown in FIG. 1. A turbine blade tip clearance 218 is defined as a gap between the turbine vane carrier 214 and the rotating turbine blade 128.

A blower 208 is disposed external of the outer casing 202. A first cooling flow pipe 212 is in flow connection with the blower 208 and passes through the outer casing 202. The blower 208 blows into a cooling flow 210 and passes the cooling flow 210 into the first cooling flow pipe 212. The cooling flow 210 is directed by the first cooling flow pipe 212 into the casing cavity 206 and flows to the exhaust portion 110. The first cooling flow pipe 212 is one of a plurality of first cooling flow pipes 212 that are circumferentially distributed around the outer casing 202. The plurality of first cooling flow pipes 212 are in flow connection with the blower 208 through a manifold.

The cooling flow 210 may include ambient air that is outside of the gas turbine engine 100 and has a standard atmospheric temperature and pressure at the georgical location of the gas turbine engine 100. The cooling flow 210 may also include other types of flow, such as flow from the compressor section 102. The blower 208 may be a centrifugal blower 208. Other types of blower 208 are also possible.

A turbine vane carrier cooling flow path 222 is arranged to direct the cooling flow 210 into contact with the turbine vane carrier 214 to cool the turbine vane carrier 214. In the construction illustrated in FIG. 2, the turbine vane carrier cooling flow path 222 includes a cooling hole 220 that passes through the inner casing 204. The cooling hole 220 directs a portion of the cooling flow 210 from the casing cavity 206 into contact with the turbine vane carrier 214 to impingement cool the turbine vane carrier 214. The cooling hole 220 is one of a plurality of cooling holes 220 that are circumferentially distributed around the inner casing 204. The plurality of cooling holes 220 form the turbine vane carrier cooling flow path 222.

The cooling hole 220 is disposed at one end of the turbine vane carrier 214. In the construction illustrated in FIG. 2, the cooling hole 220 is disposed at an aft end of the turbine vane carrier 214 with respect to the working flow 216. In other constructions, the cooling hole 220 may be disposed at a forward end of the turbine vane carrier 214 with respect to the working flow 216.

A filter 224 is in flow connection with the blower 208. The filter 224 filters the cooling flow 210 prior to flowing into the first cooling flow pipe 212. In the construction shown in FIG. 2, the filter 224 is disposed upstream of the blower 208 with respect to the cooling flow 210 so that the cooling flow 210 is filtered prior to blowing into the blower 208. In other constructions, the filter 224 may be disposed downstream of the blower 208 with respect to the cooling flow 210 so that the cooling flow 210 is filtered after flowing out the blower 208 and prior to flowing into the first cooling flow pipe 212. The filter 224 may be a centrifugal filter 224. Other types of filter 224 are also possible.

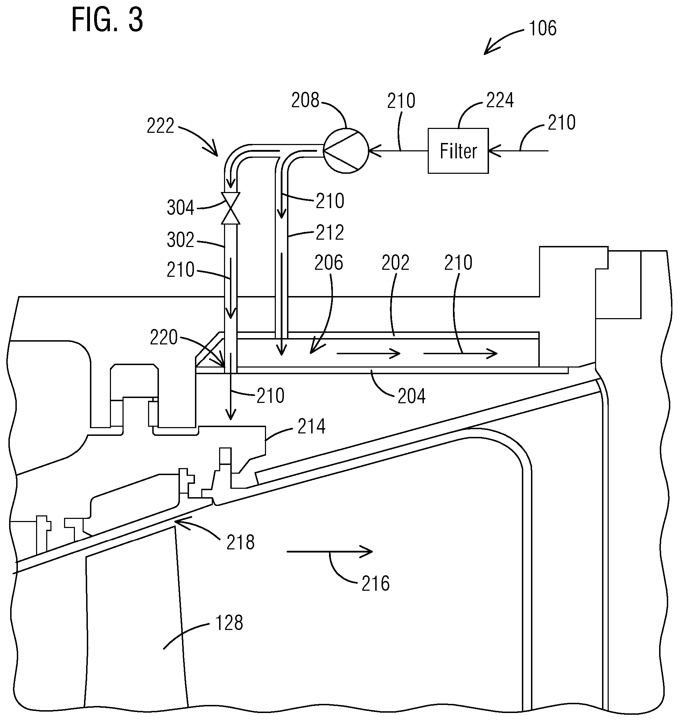

FIG. 3 illustrates a cross-section view of a portion of the gas turbine engine 100 shown in FIG. 1 that better illustrates the turbine section 106. In the construction illustrated in FIG. 3, the turbine vane carrier cooling flow path 222 includes a second cooling flow pipe 302 that is in flow connection with the blower 208 and passes through the outer casing 202 and the inner casing 204. The blower 208 blows into the cooling flow 210 and passes the cooling flow 210 into the second cooling flow pipe 302. The cooling flow 210 is directed by the second cooling flow pipe 302 into contact with the turbine vane carrier 214 to impingement cool the turbine vane carrier 214. The second cooling flow pipe 302 is one of a plurality of second cooling flow pipes 302 that are circumferentially distributed around the outer casing 202 and the inner casing 204. The plurality of second cooling flow pipes 302 are in flow connection with the blower 208 through a manifold. The plurality of second cooling flow pipes 302 form the turbine vane carrier cooling flow path 222.

The cooling flow 210 may include ambient air that is outside of the gas turbine engine 100 and has a standard atmospheric temperature and pressure at the georgical location of the gas turbine engine 100. The cooling flow 210 may also include other types of flow, such as flow from the compressor section 102. The blower 208 may be a centrifugal blower 208. Other types of blower 208 are also possible.

The second cooling flow pipe 302 is disposed at one end of the turbine vane carrier 214. In the construction illustrated in FIG. 3, the second cooling flow pipe 302 is disposed at the aft end of the turbine vane carrier 214 with respect to the turbine vane carrier 214. In other constructions, the second cooling flow pipe 302 may be disposed at a forward end of the turbine vane carrier 214 with respect to the working flow 216.

The turbine vane carrier cooling flow path 222 includes a flow control valve 304 that is disposed external of the outer casing 202 and is in flow connection with the second cooling flow pipe 302. The flow control valve 304 controls the cooling flow 210 passing through the second cooling flow pipe 302 into contact with the turbine vane carrier 214. The flow control valve 304 is moveable between an open position and a closed position to control the cooling flow 210 to the turbine vane carrier 214. The flow control valve 304 may be an on/off valve.

In the construction shown in FIG. 3, the filter 224 is disposed upstream of the blower 208 with respect to the cooling flow 210 so that the cooling flow 210 is filtered prior to blowing into the blower 208. In other constructions, the filter 224 may be disposed downstream of the blower 208 with respect to the cooling flow 210 so that the cooling flow 210 is filtered after flowing out the blower 208 and prior to flowing into the first cooling flow pipe 212 and the second cooling flow pipe 302. The filter 224 may be a centrifugal filter 224. Other types of filter 224 are also possible.

The construction of FIG. 3 is otherwise similar to the construction of FIG. 2, which is not described in detail with reference to FIG. 3.

During operation, with reference to FIG. 2 and FIG. 3, the blower 208 blows cooling flow 210 into the first cooling flow pipe 212. The cooling flow 210 is directed by the first cooling flow pipe 212 into the casing cavity 206 and flows to the exhaust portion 110 to cool components of the exhaust portion 110. One of the components of the exhaust portion 110 includes an exhaust casing. After cooling the exhaust casing, the cooling flow 210 is directed to cool the rotating turbine blades 128 of the last stage of the turbine section 106 and is used as a purge air to an oil seal of the gas turbine engine 100. The cooling flow 210 from the blower 208 is also directed by the turbine vane carrier cooling flow path 222 to cool the turbine vane carrier 214.

With reference to FIG. 2, the turbine vane carrier cooling flow path 222 includes a plurality of cooling holes 220 that pass through the inner casing 204. A portion of the cooling flow 210 is directed by the plurality of cooling holes 220 from the casing cavity 206 into contact with the turbine vane carrier 214 to cool the turbine vane carrier 214.

With reference to FIG. 3, the turbine vane carrier cooling flow path 222 includes a plurality of second cooling flow pipes 302 that are in flow connection with the blower 208 and pass through the outer casing 202 and the inner casing 204. A portion of the cooling flow 210 from the blower 208 is directed by the plurality of second cooling flow pipes 302 into contact with the turbine vane carrier 214 to cool the turbine vane carrier 214. The flow control valve 304 moves between the open position and the closed position to control the cooling flow 210 passing through the plurality of second cooling flow pipes 302 into contact with the turbine vane carrier 214 as required by a performance requirement of the gas turbine engine 100. For example, the flow control valve 304 could be closed during startup and then opened at a timepoint after the startup to activate the cooling flow 210 to flow to the turbine vane carrier 214 to cool the turbine vane carrier 214.

The turbine vane carrier cooling flow path 222 utilizes the cooling flow 210 provided by the blower 208 to cool the turbine vane carrier 214 in addition to cool the exhaust casing. The cooling flow 210 is supplied from a source that is outside of the gas turbine engine 100. The cooling flow 210 may be ambient air from the outside of the gas turbine engine 100. Such arrangement does not negatively affect the power output of the gas turbine engine 100. The cooling flow 210 from the ambient air has a standard atmospheric temperature and pressure at the georgical location of the gas turbine engine 100 which provides a stable cooling to the turbine vane carrier 214. The cooling flow 210 allows for the control and reduction of any thermal variation within the turbine vane carrier 214 and thus maintains a desired turbine blade tip clearance 218 between the turbine vane carrier 214 and the rotating turbine blade 128.

Although an exemplary embodiment of the present disclosure has been described in detail, those skilled in the art will understand that various changes, substitutions, variations, and improvements disclosed herein may be made without departing from the scope of patented subject matter.

The scope of patented subject matter is defined only by the appended claims.

### LISTING OF DRAWING ELEMENTS

100: gas turbine engine
102: compressor section
104: combustion section
106: turbine section
108: inlet section
110: exhaust portion
112: central axis
114: compressor stage
116: stationary compressor vane
118: rotating compressor blade
120: combustor
122: exhaust gas
124: turbine stage
126: stationary turbine vane
128: rotating turbine blade
130: turbine inlet
132: control system
134: rotor
202: outer casing
204: inner casing
206: casing cavity
208: blower
210: cooling flow
212: first cooling flow pipe
214: turbine vane carrier
216: working flow
218: turbine blade tip clearance
220: cooling hole
222: turbine vane carrier cooling flow path
224: filter
302: second cooling flow pipe
304: flow control valve

## Claims

1. A gas turbine engine (100) comprising:
an outer casing (202);
an inner casing (204) surrounded by the outer casing (202), the inner casing (204) and the outer casing (202) defining a casing cavity (206) therebetween;
a blower (208) disposed external of the outer casing (202) and operable to blow into a cooling flow (210);
a turbine vane carrier (214) disposed internal of the inner casing (204); and
a turbine vane carrier cooling flow path (222) arranged to direct the cooling flow (210) into contact with the turbine vane carrier (214);further comprising a first cooling flow pipe (212) that is in flow connection with the blower (208) to receive the cooling flow (210) and arranged to direct the cooling flow (210) into the casing cavity (206);
wherein the turbine vane carrier cooling flow path (222) comprises a second cooling flow pipe (302) that is in flow connection with the blower (208) to receive the cooling flow (210) and arranged to direct the cooling flow (210) into contact with the turbine vane carrier (214);
**characterized in that**
the second cooling flow pipe (302) is positioned at an aft end of the turbine vane carrier (214) with respect to a working flow.

2. The gas turbine engine (100) of claim 1,
wherein the turbine vane carrier cooling flow path (222) comprises a flow control valve (304) that is in flow connection with the second cooling flow pipe (302), and wherein the flow control valve (304) is movable between an open position and a closed position to control the cooling flow (210) passing through the second cooling flow pipe (302) into contact with the turbine vane carrier.

3. The gas turbine engine (100) of claim 1 or 2,
wherein the second cooling flow pipe (302) is one of a plurality of second cooling flow pipes (302) circumferentially distributed around the outer casing and the inner casing.

4. The gas turbine engine (100) of one of the claims 1 to 3,
further comprising a filter (224) that is in flow connection with the blower (208).

5. The gas turbine engine (100) of one of the claims 1 to 4,
wherein the cooling flow (210) comprises ambient air that is outside of the gas turbine engine (100).

## Patentansprüche

1. Gasturbinentriebwerk (100), umfassend:
ein äußeres Gehäuse (202);
ein inneres Gehäuse (204), das durch das äußere Gehäuse (202) umgeben ist, wobei das innere Gehäuse (204) und das äußere Gehäuse (202) einen Gehäusehohlraum (206) dazwischen definieren;
ein Gebläse (208), das außerhalb des äußeren Gehäuses (202) angeordnet und dazu betreibbar ist, in einen Kühlstrom (210) zu blasen;
einen Turbinenleitschaufelträger (214), der innerhalb des inneren Gehäuses (204) angeordnet ist; und
einen Turbinenleitschaufelträger-Kühlströmungspfad (222), der dazu angeordnet ist, die Kühlströmung (210) in Kontakt mit dem Turbinenleitschaufelträger (214) zu leiten; ferner umfassend ein erstes Kühlströmungsrohr (212), das mit dem Gebläse (208) in Strömungsverbindung steht, um die Kühlströmung (210) aufzunehmen, und dazu angeordnet ist, die Kühlströmung (210) in den Gehäusehohlraum (206) zu leiten;
wobei der Turbinenleitschaufelträger-Kühlströmungspfad (222) ein zweites Kühlströmungsrohr (302) umfasst, das mit dem Gebläse (208) in Strömungsverbindung steht, um die Kühlströmung (210) aufzunehmen, und dazu angeordnet ist, die Kühlströmung (210) in Kontakt mit dem Turbinenleitschaufelträger (214) zu leiten;
**dadurch gekennzeichnet, dass**
das zweite Kühlströmungsrohr (302) an einem hinteren Ende des Turbinenleitschaufelträgers (214) in Bezug auf eine Arbeitsströmung positioniert ist.

2. Gasturbinentriebwerk (100) nach Anspruch 1, wobei der Turbinenleitschaufelträger-Kühlströmungspfad (222) ein Flussregelventil (304) umfasst, das mit dem zweiten Kühlströmungsrohr (302) in Strömungsverbindung steht, und wobei das Flussregelventil (304) zwischen einer offenen Position und einer geschlossenen Position bewegbar ist, um die Kühlströmung (210) zu steuern, die durch das zweite Kühlströmungsrohr (302) in Kontakt mit dem Turbinenleitschaufelträger fließt.

3. Gasturbinentriebwerk (100) nach Anspruch 1 oder 2, wobei das zweite Kühlströmungsrohr (302) eines aus einer Vielzahl von zweiten Kühlströmungsrohren (302) ist, die umlaufend um das äußere Gehäuse und das innere Gehäuse verteilt sind.

4. Gasturbinentriebwerk (100) nach einem der Ansprüche 1 bis 3, ferner umfassend einen Filter (224), der mit dem Gebläse (208) in Strömungsverbindung steht.

5. Gasturbinentriebwerk (100) nach einem der Ansprüche 1 bis 4, wobei die Kühlströmung (210) Umgebungsluft umfasst, die sich außerhalb des Gasturbinentriebwerks (100) befindet.

## Revendications

1. Moteur à turbine à gaz (100) comprenant :
un carter externe (202) ;
un carter interne (204) entouré par le carter externe (202), le carter interne (204) et le carter externe (202) définissant une cavité de carter (206) entre eux ;
une soufflante (208) disposée à l'extérieur du carter externe (202) et apte à insuffler un écoulement de refroidissement (210) ;
un support d'aubage de turbine (214) disposé à l'intérieur du carter interne (204) ; et
un trajet d'écoulement de refroidissement de support d'aubage de turbine (222) agencé pour diriger l'écoulement de refroidissement (210) en contact avec le support d'aubage de turbine (214) ; comprenant en outre une première conduite d'écoulement de refroidissement (212) qui est en liaison fluidique avec la soufflante (208) pour recevoir l'écoulement de refroidissement (210) et qui est agencée pour diriger l'écoulement de refroidissement (210) dans la cavité de carter (206) ;
dans lequel le trajet d'écoulement de refroidissement de support d'aubage de turbine (222) comprend une seconde conduite d'écoulement de refroidissement (302) qui est en liaison fluidique avec la soufflante (208) pour recevoir l'écoulement de refroidissement (210) et qui est agencée pour diriger l'écoulement de refroidissement (210) en contact avec le support d'aubage de turbine (214) ;
**caractérisé en ce que**
la seconde conduite d'écoulement de refroidissement (302) est positionnée au niveau d'une extrémité arrière du support d'aubage de turbine (214) par rapport à un flux de travail.

2. Moteur à turbine à gaz (100) selon la revendication 1, dans lequel le trajet d'écoulement de refroidissement de support d'aubage de turbine (222) comprend une vanne de commande d'écoulement (304) qui est en liaison fluidique avec la seconde conduite d'écoulement de refroidissement (302), et dans lequel la vanne de commande d'écoulement (304) est mobile entre une position ouverte et une position fermée pour commander l'écoulement de refroidissement (210) traversant la seconde conduite d'écoulement de refroidissement (302) pour entrer en contact avec le support d'aubage de turbine.

3. Moteur à turbine à gaz (100) selon la revendication 1 ou 2, dans lequel la seconde conduite d'écoulement de refroidissement (302) est une conduite parmi une pluralité de secondes conduites d'écoulement de refroidissement (302) réparties circonférentiellement autour du carter externe et du carter interne.

4. Moteur à turbine à gaz (100) selon l'une quelconque des revendications 1 à 3, comprenant en outre un filtre (224) qui est en liaison fluidique avec la soufflante (208).

5. Moteur à turbine à gaz (100) selon l'une quelconque des revendications 1 à 4, dans lequel l'écoulement de refroidissement (210) comprend de l'air ambiant qui se trouve à l'extérieur du moteur à turbine à gaz (100).
